# EUROPEAN PATENT SPECIFICATION

(11) **EP 4 529 769 B1**
(45) Date of publication and mention of the grant of the patent: **15.04.2026**
(21) Application number: 24203041.9
(22) Date of filing: 26.09.2024
(51) Int. Cl.: A21C 3/08

(54) **DEVICE FOR TWISTING DOUGH PIECES**
VORRICHTUNG ZUM VERDREHEN VON TEIGSTÜCKEN
DISPOSITIF POUR TORSADER DES MORCEAUX DE PÂTE

(30) Priority: 28.09.2023 NL 2035912
(43) Date of publication of application: 02.04.2025
(73) Proprietor: Radie B.V., 4104 BC Culemborg (NL)
(72) Inventor: van Blokland, Johannes, Josephus, Antonius, Culemborg (NL)
(74) Representative: IP Maison

(56) References cited:
- GB-A- 412 063
- GB-A- 864 185
- US-A- 1 974 503
- US-A- 2 037 985
- US-A- 2 132 158
- US-A- 3 028 821

## Description

The present invention relates to a device for twisting dough pieces, in particular twisting unbaked dough pieces over a twisting axis that extends in their length direction. Such a device is known from GB 864 185A.

Various dough products exist that are formed by a twisted dough piece. At an industrial scale, this twisting is always a difficult step in dough handling. For this processing step, the dough has to be gripped, twisted and released, and these steps have to be performed on subsequent dough pieces, preferably at high speeds.

However, gripping and releasing dough are handling steps that are sensitive to errors, and the handling devices are sensitive for contamination due to the touching and releasing of the dough, that may stick to the gripping surfaces of such device.

As an addition, the elasticity of the dough makes the twisting a challenging task, apart from the technical difficulties described above.

It is therefore a goal of the present invention to provide a device that overcomes the above mentioned disadvantages.

The invention thereto proposes a device for twisting dough pieces, comprising:
- a pair of conveyor belts, comprising a first and a second conveyor belt, with mutually facing conveying surfaces for clamping a dough piece between them, and for transporting the dough piece in the conveying direction of the mutually facing conveying surfaces of the first and a second conveyor belt, which transport is the longitudinal direction of said dough piece;
- a third conveyor belt, positioned downstream of the pair of conveyor belts in the conveying direction, for taking over a dough piece from the pair of conveyor belts and transporting it further in the longitudinal direction thereof;
   wherein
- the pair of conveyor belts is rotatable around a rotation axis extending in the longitudinal direction, for twisting the dough piece around the longitudinal axis during the transfer of the dough piece from the pair of conveyor belts to the third conveyor belt.

The conveyor belts in the device according to the invention may be endless conveyor belts. These conveyor belts form the part of the device that engages the dough pieces to be twisted while twisting. As the belts are looped around rollers, they gradually unwind the dough, which is then peeled off without sticking to the conveyor belt surface.

The belts may be pre-tensioned toward each other, and/or be positioned at a mutual distance that exactly matches the thickness of dough pieces to be twisted, so that during twisting, the dough cannot slide between the pair of conveyor belts, or fall out of it. Additionally, and/or alternatively, the conveyor belt surfaces of the pair of conveyor belts, may be profiled, such as ribbed or provided with similar grip enhancing means. The distance and/or tension between the conveyor belts forming the pair of belts may be adjustable.

In use, a dough piece may be placed between the conveyor belts of the pair of belts, conveyed until its leading edge reaches the downstream end of the pair of conveyor belts. From that point on, the leading edge may be further conveyed, so that it is partly supported by the third conveyor belt. Once this stage is reached, the pair of conveyor belts may be driven to rotate with respect to the third conveyor belt, therewith twisting the dough piece at the point where it is taken over from the pair of conveyor belts to the third conveyor belt.

The device according to the invention has the advantage of allowing also soft doughs with a high water content to be twisted, whether or not combined with a pre-fermentation process. In practice, such dough is very elastic and possibly sticky and is even difficult to twist manually.

The device according to the invention may comprise a fourth conveyor belt, positioned upstream in the transport direction with respect to the pair of conveyor belts, for delivering, in the transport direction, a piece of dough to be twisted around its longitudinal axis to the pair of conveyor belts. This fourth conveyor belt then serves to deliver the dough pieces to be twisted to the pair of conveyor belts.

The third and/or fourth conveyor belt may be arranged such that they convey dough pieces at a support level that matches the position the dough pieces may have in between the pair of conveyor belts. This allows for a flush transfer of dough pieces and has proven to allow the creation of stable dough pieces on the fourth conveyor belt.

According to the invention, the pair of conveyor belts is suspended in a frame that is rotatable with respect to the third conveyor belt. Such frame may comprise drive means for driving the pair of conveyor belts and for rotating the frame itself.

In order to avoid the need of leading wiring or other drive means to rotating parts of the frame, the frame is provided on an outwardly facing side with a first force or torque transmission system, such as a gear ring or a pulley for a belt, for transmitting a driving force or torque for the rotation of the frame from an external drive located outside the frame, to the frame. This allows a drive system to be externally arranged and to be provided with engaging means for the force or torque transmission system, such as a gear wheel or a belt. This construction allows to mount driving means below the level where food products are handled and facilitates easy maintenance and a relatively simple and robust construction.

The frame is additionally provided on an outwardly projecting with a second force or torque transmission system, such as a gear ring or a pulley for a belt, for transmitting a driving force or torque for the movement of the pair of conveyor belts for transporting the dough piece in the conveying direction. Both force or torque transmission systems are independently accessible, in order to allow independent control of the rotational movement of the pair of conveyor belts and the driving of the pair of conveyor belts for transporting the dough piece in the conveying direction. Accordingly, the device is provided with an independently controllable first and a second external drive, each engaging one of the transmission systems.

The device according to the invention may further comprise a control system, arranged for controlling the first and second external drive, but more in particular arranged for discounting the mutual influence of a driving force or torque for the rotation of the frame and a driving force or torque for the movement of the pair of conveyor belts. This mutual influence may be caused by the fact that both the driving force or torque for the rotation of the frame and a driving force or torque for the movement of the pair of conveyor belts are transferred to the frame by a rotational movement of the frame or a transmission or part thereof coupled to the frame. When for instance the driving force or torque for the movement of the pair of conveyor belts is transferred to the frame via a gear ring and gear wheels coupled therewith, such gear ging is also rotated when the frame is driven in order to rotate. Such rotation should then be taken into account when providing the driving force or torque for the movement of the pair of conveyor belts, and be compensated for.

The fourth conveyor belt may be arranged to move continuously, and/or to continuously supply dough pieces to the conveyor belt. In general, all four belts may be configured and/or controlled to have the same speed of conveyance, although the third conveyor belt may also be configured to have a lower speed, when the dough pieces become shorter during twisting, or a higher speed, when the dough pieces are (to be) stretched.

In yet another embodiment, the device according to the invention comprises a portioning device for supplying dough pieces to the fourth conveyor, designed for supplying dough pieces to the pair of conveyor belts with a mutual distance in the transport direction that is at least equal to the length of a dough piece. Preferably, the dough pieces all have the same, fixed length and a fixed mutual distance. The portioning device may be adapted for supplying dough pieces with such a mutual distance that a number of N dough pieces together with N-1 mutual distances has a maximum length of the distance of the transport surfaces of the pair of conveyor belts facing each other. This results in no new dough piece arriving from the fourth conveyor belt during twisting of a dough piece. There may be one or more other dough pieces between the pair of conveyor belt when one dough piece is being twisted. Those dough pieces are only flipped several times at that moment.

In yet another embodiment, the device comprises a clamp for fixing the position of a downstream end of a dough piece with respect to the third conveyor, to prevent the dough piece from rotating during twisting. Such clamp may be designed to move with the dough piece during twisting, and after twisting the dough piece to move back to a position for clamping a next dough piece.

The invention will now be elucidated into more detail with reference to the following figures. Herein:
- Figure 1 shows a simplified perspective overview of a device according to the invention;
- Figure 2 shows a number of steps during a first use of the device from figure 1;
- Figure 3 shows a number of steps during a second use of the device from figure 1;
- Figure 4 shows a detailed technical implementation of part of the device from figure 1;
- Figure 5 shows a detailed perspective view of the device from figure 1;
- Figure 6 shows a graph with control characteristics for controlling the device from figure 1; and
- Figure 7 shows an arrangement of multiple devices according to the invention.

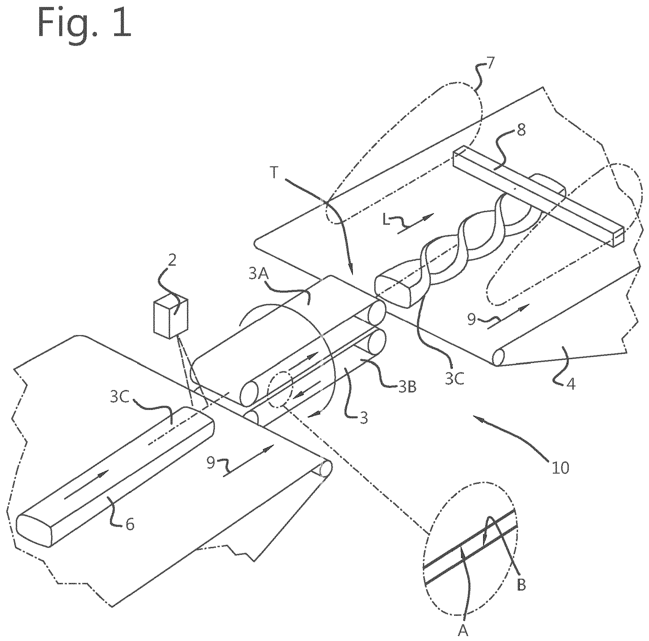

Figure 1 shows a device 10 for twisting dough pieces 6, comprising a pair 3 of conveyor belts, comprising a first and a second conveyor belt 3A, 3B, with mutually facing conveying surfaces for clamping a dough piece 6 between them, and for transporting the dough piece 6 in the conveying direction 9 of the mutually facing conveying surfaces A, B of the first and a second conveyor belt 3A, 3B, which transport direction is the longitudinal direction L of said dough pieces 6. The device further comprises a third conveyor belt 4, positioned downstream of the pair 3 of conveyor belts in the conveying direction 9, for taking over a dough piece 6 from the pair 3 of conveyor belts and transporting it further in the longitudinal direction L thereof, being parallel to the conveying direction 9 in the example shown. The pair 3 of conveyor belts is rotatable around a rotation axis 3C extending in the longitudinal direction 9, for twisting the dough pieces 6 around the longitudinal axis L during the transfer of the dough piece 6 from the pair 3 of conveyor belts to the third conveyor belt 4. This transfer and twisting take place at location T in figure 1. The rotation of the pair of conveyors 3 is triggered by a signal obtained from sensor 2, that detects a leading edge from a dough piece 3. Based on known speeds and lengths of the fourth conveyor 1 and the dough piece 6, the twisting may be controlled.

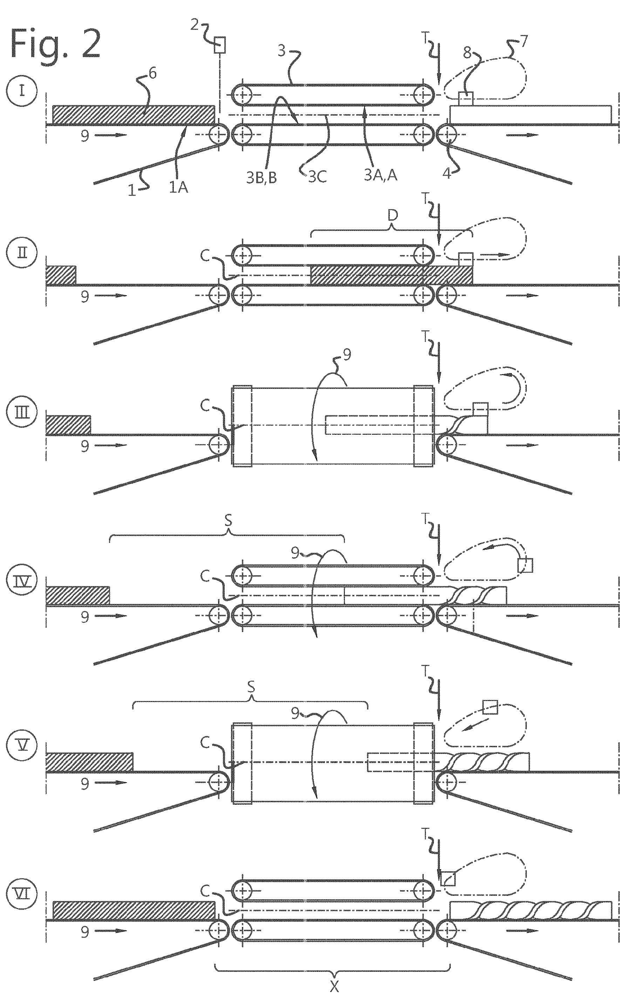

Figure 2 shows steps I-VI, taking place subsequently when using the device according to the invention. During a first step I, the fourth conveyor belt 1 delivers a dough piece 6 in the direction of conveyance 9, toward the pair 3 of conveyor belts. Said pair of conveyor belts is in a receiving position and orientation for receiving a dough piece 6. That means, its surface B is aligned with surface of the fourth conveyor belt 1 for a smooth transition. Clamp 7 is in a resting position above the third conveyor 4.

During step II the dough piece 6 is moved in between the pair of conveyors 3, and in this example, a leading end is already on the third conveyor 4, and clamped by clamp 7, that has travelled along in the direction of conveyance 9 from the moment it engaged the dough piece 6.

During steps III-IV-V the pair 3 of conveyor belts rotates around its axis C and the dough piece 6 is twisted. In general, the pair of conveyor belts 3 and the third conveyor belt 4 and the fourth conveyor belt 1 have the same speed in the direction of conveyance 9. The turning speed relative to the speed of the conveyance of the pair of conveyor belts 3 determines the amount of twists, or in other words, the number of turns made by the pair of conveyor belts during conveyance of the dough piece 6 from the pair of conveyor belts 3 to the third conveyor belt 4. It is visible that during step IV, the clamp 7 disengages the dough piece 6, which then has enough resistance to remain on the third conveyor belt 4 without rolling around its longitudinal axis L. It is however thinkable in general with respect to the present invention that the third conveyor belt has a different, in particular lower, speed than the pair of conveyor belts 3.

In step VI the first dough piece 6 has left the pair 3 of rotating conveyor belts, and a next dough piece 6 is ready to enter the pair 3 of conveyor belts. The device is dimensioned such, that the length X of the pair 3 of conveyor belts is at least the length D of a certain number N of dough pieces 6, plus N-1 lengths of the spaces S between the dough pieces 6. In this case, N equals 1.

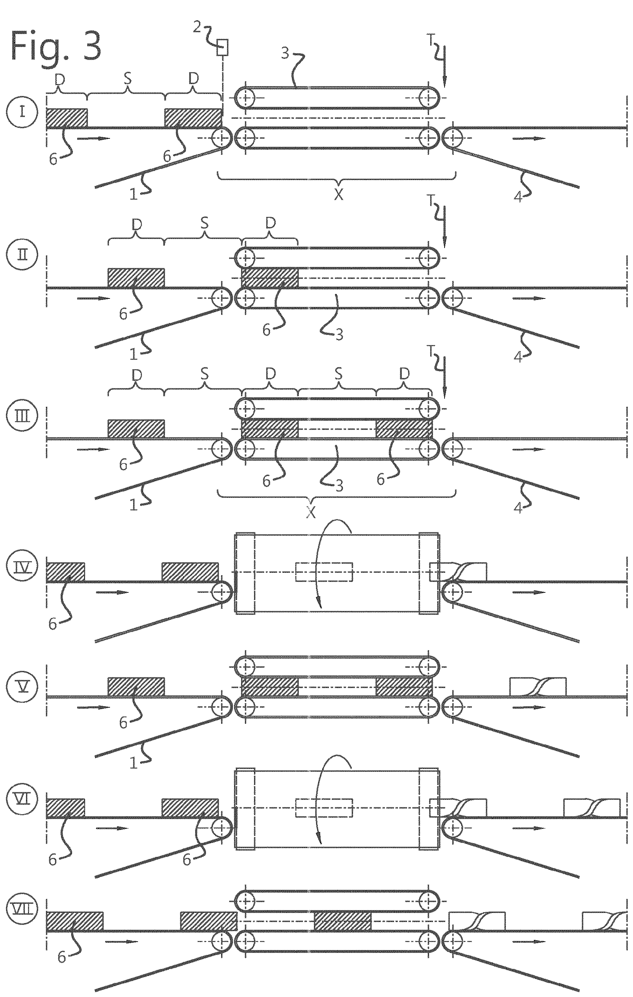

Figure 3 shows similar steps to those from figure 2, be it that a situation is depicted wherein the number N is 2. It is visible that during steps I-III, two dough pieces 6 are brought in between the pair 3 of conveyor belts. During step IV, the leading dough piece is twisted, while the lagging dough piece is only flipped a number of times.

Step V shows that a next dough piece 6 has entered the pair 3 of conveyor belts, before the former lagging dough piece 6, now leading, can be twisted. Steps III-V are then repeated as long as new dough pieces 6 are delivered by the fourth conveyor belt 1.

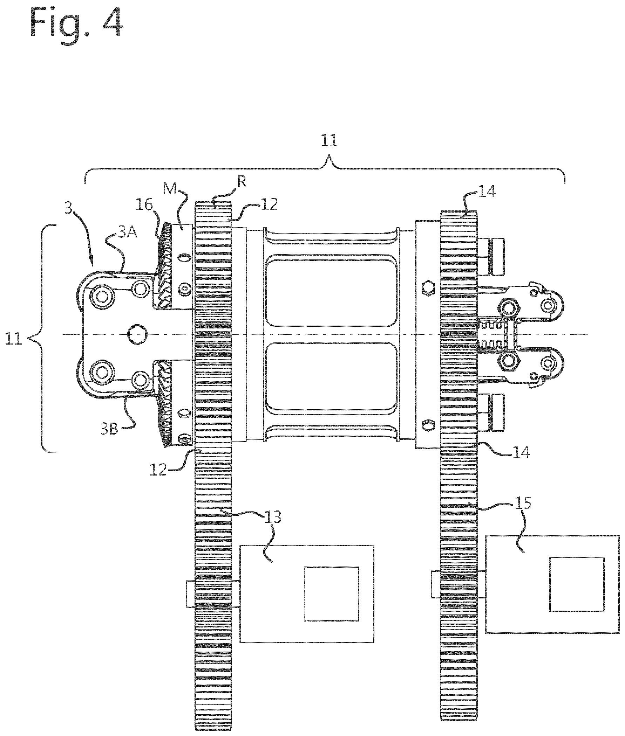

Figure 4 shows a technical implementation of the pair 3 of conveyor belts of the device from figures 1-3. The pair of conveyor belts is arranged in a rotatable frame 11, which is provided on an outwardly facing side with a first force or torque transmission system 12, formed by a gear ring, for transmitting a driving force or torque for the rotation of the frame from an external drive 13 located outside the frame, to the frame 11.

The frame 11 is further provided on an outwardly projecting with a second force or torque transmission system 14 also formed by a gear ring, for transmitting a driving force or torque for the movement of the pair 3 of conveyor belts from an external drive 15 for transporting the dough piece 6 in the conveying direction. Also visible are the independently controllable first and a second external drive 13, 15, each engaging one of the transmission systems 12, 14. It is to be understood that side M and side R can rotate with respect to each other.

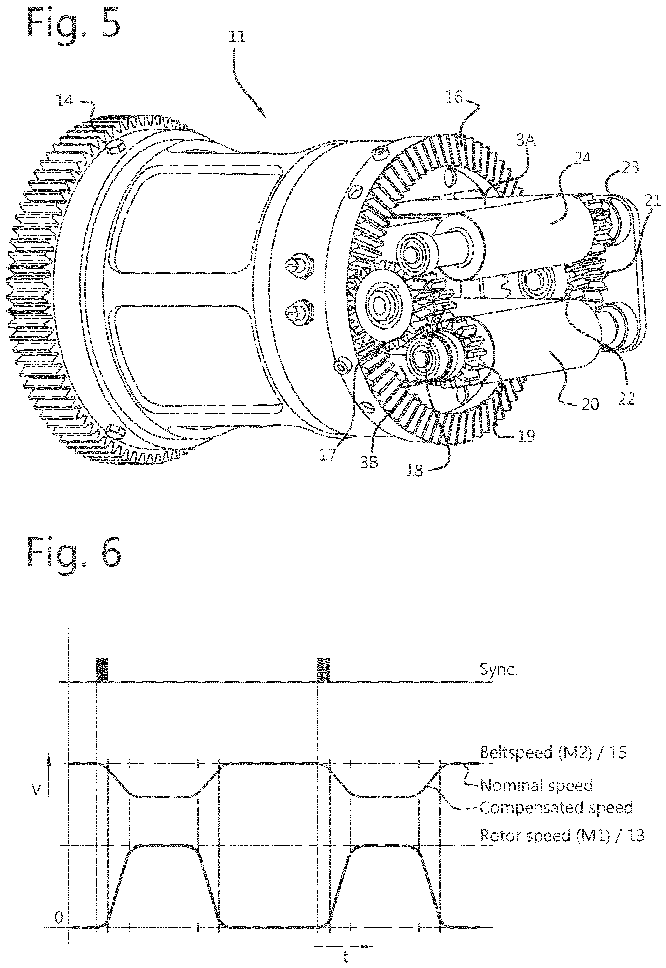

Figure 5 shows the further drive train for driving the conveyor belts 3A, 3B from the pair 3 of conveyors. The gear ring 14 of the second force or torque transmission system 14 is engaged by gear wheels 17, 22, which are coupled by gear wheels 18, 22 respectively to gear wheels 19, 23, connected with driving rollers 20, 24 of conveyor belts 3A, 3B.

The rotational speed of the gear ring 14 with respect to the part of the frame 11 holding the conveyor belts 3A, 3B is proportional to the speed of the surfaces A, B for conveying dough pieces. However, the frame 11 may move with respect to external drive 15, due to movement of drive 13.

Figure 6 shows how the speed of the second external drive 15 may be compensated for the movement of the first external drive 13.

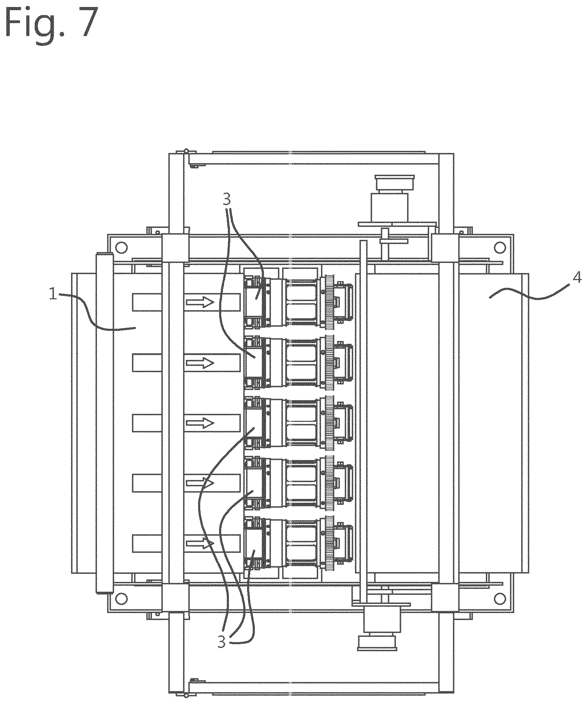

Figure 7 shows a dough processing device, comprising multiple devices according to the present invention, wherein multiple pairs 3 of conveyor belts share the same third conveyor belt 4 and fourth conveyor belt 1, for allowing multiple lanes of dough pieces 6 to be twisted in parallel.

The above described embodiments are examples only, and do not limit the scope of protection of the present invention, as defined in the following claims.

## Claims

1. Device (10) for twisting dough pieces, comprising:
- a pair (3) of conveyor belts, comprising a first and a second conveyor belt (3A, 3B), with mutually facing conveying surfaces for clamping a dough piece (6) between them, and for transporting the dough piece (6) in the conveying direction of the mutually facing conveying surfaces of the first and a second conveyor belt (3A, 3B), which transport direction is the longitudinal direction of said dough piece (6);
- a third conveyor belt (4), positioned downstream of the pair (3) of conveyor belts in the conveying direction, for taking over a dough piece (6) from the pair of conveyor belts and transporting it further in the longitudinal direction thereof;
wherein
- the pair (3) of conveyor belts is rotatable around a rotation axis extending in the longitudinal direction, for twisting the dough piece (6) around the longitudinal axis during the transfer of the dough piece (6) from the pair of conveyor belts to the third conveyor belt, wherein the pair (3) of conveyor belts is suspended in a frame (11) that is rotatable with respect to the third conveyor belt (4),
wherein the frame (11) is provided on an outwardly facing side with a first force or torque transmission system (12), such as a gear ring or a pulley for a belt, for transmitting a driving force or torque for the rotation of the frame (11) from an external drive located outside the frame (11), to the frame (11)
wherein the frame (11) is provided on an outwardly projecting with a second force or torque transmission system (14), such as a gear ring or a pulley for a belt, for transmitting a driving force or torque for the movement of the pair (3) of conveyor belts for transporting the dough piece (6) in the conveying direction, **characterised in that** the device is provided with an independently controllable first and a second external drive, each engaging one of the transmission systems (12,14).

2. Device according to claim 1, comprising a fourth conveyor belt (1), positioned upstream in the transport direction with respect to the pair (3) of conveyor belts, for delivering, in the transport direction, a piece of dough (6) to be twisted around its longitudinal axis to the pair (3) of conveyor belts.

3. Device (10) according to one of the preceding claims, comprising a control system, arranged for controlling the first and second external drive, in particular arranged for discounting the mutual influence of a driving force or torque for the rotation of the frame and a driving force or torque for the movement of the pair (3) of conveyor belts.

4. Device (10) according to one of the preceding claims and claim 2, wherein the fourth conveyor belt (1) is arranged to move continuously, and/or to continuously supply dough pieces (6) to the pair (3) of conveyor belts.

5. Device (10) according to one of the preceding claims and claim 2, comprising a portioning device for supplying dough pieces (6) to the fourth conveyor belt (1), designed for supplying dough pieces (6) to the pair (3) of conveyor belts with a mutual distance in the transport direction that is at least equal to the length of a dough piece (6).

6. Device (10) according to claim 5, wherein the portioning device is adapted for supplying dough pieces (6) with such a mutual distance that a number of N dough pieces (6) together with N-1 mutual distances has a maximum length of the distance of the transport surfaces of the pair (3) of conveyor belts facing each other.

7. Device (10) according to one of the preceding claims including claim 2, comprising a clamp (7) for fixing the position of a downstream end of a dough piece (6) with respect to the third conveyor (4), to prevent the dough piece (6) from rotating during twisting.

8. Device (10) according to any of the preceding claims, wherein the clamp (7) is designed to move with the dough piece (6) during twisting, and after twisting the dough piece (6) to move back to a position for clamping a next dough piece (6).

9. Device (10) according to any of the preceding claims, comprising a sensor (2) for detecting the arrival of a dough piece (6) or a leading end thereof, and for providing a signal indicating such arrival to a control system for rotating the pair (3) of conveyor belts around the rotation axis.

10. Device (10) according to any of the preceding claims, comprising multiple pairs (3) of conveyor belts, arranged in parallel preceding a common third (4) and/or following a common fourth (1) conveyor belt.

## Patentansprüche

1. Vorrichtung (10) zum Verdrehen von Teigstücken, aufweisend:
- ein Paar (3) Förderbänder, aufweisend ein erstes und ein zweites Förderband (3A, 3B) mit zueinander weisenden Förderoberflächen zum Einklemmen eines Teigstücks (6) zwischen ihnen, und zum Transportieren des Teigstücks (6) in der Förderrichtung von den zueinander weisenden Förderoberflächen des ersten und des zweiten Förderbands (3A, 3B), wobei die Transportrichtung die Längsrichtung dieses Teigstücks (6) ist;
- ein drittes Förderband (4), das in der Förderrichtung stromabwärts des Paars (3) Förderbänder angeordnet ist, zum Übernehmen eines Teigstücks (6) von dem Paar Förderbänder und um es in der Längsrichtung desselben weiter zu transportieren;
wobei
- das Paar (3) Förderbänder um eine Drehachse drehbar ist, die sich in der Längsrichtung erstreckt, um während der Übergabe des Teigstücks (6) von dem Paar Förderbänder zu dem dritten Förderband das Teigstück (6) um die Längsachse zu verdrehen, wobei das Paar (3) Förderbänder in einem Rahmen (11) aufgehängt ist, der bezüglich des dritten Förderbands (4) drehbar ist, wobei der Rahmen (11) an einer nach außen weisenden Seite mit einem ersten Kraft- oder Drehmomentübertragungssystem (12) versehen ist, wie etwa einem Zahnkranz oder einer Rolle für ein Band, um von einem äußeren Antrieb, der außerhalb des Rahmens (11) angeordnet ist, eine Antriebskraft oder ein Antriebsmoment zum Drehen des Rahmens (11) auf den Rahmen (11) zu übertragen, wobei der Rahmen (11) auf einem Vorsprung nach außen mit einem zweiten Kraft- oder Drehmomentübertragungssystem (14), wie etwa einem Zahnkranz oder einer Rolle für ein Band, versehen ist, um eine Antriebskraft oder ein Antriebsmoment zum Bewegen des Paars (3) Förderbänder zu übertragen, um das Teigstück (6) in die Förderrichtung zu transportieren, **dadurch gekennzeichnet, dass** die Vorrichtung mit unabhängig voneinander steuerbaren ersten und zweiten äußeren Antrieben versehen ist, die jeweils in eines der Übertragungssysteme (12, 14) eingreifen.

2. Vorrichtung gemäß Anspruch 1, aufweisend ein viertes Förderband (1), das bezüglich des Paars (3) Förderbänder in der Transportrichtung stromaufwärts angeordnet ist, um in der Transportrichtung ein Teigstück (6), das um seine Längsachse gedreht werden soll, an das Paar (3) Förderbänder abzugeben.

3. Vorrichtung (10) gemäß einem der vorhergehenden Ansprüche, aufweisend ein Steuersystem, das eingerichtet ist, den ersten und den zweiten äußeren Antrieb anzusteuern, und das insbesondere eingerichtet ist, den wechselseitigen Einfluss einer Antriebskraft oder eines Antriebsmoments auf die Drehung des Rahmes und einer Antriebskraft oder eines Antriebsmoments auf die Bewegung des Paars (3) Förderbänder zu verringern.

4. Vorrichtung (10) gemäß einem der vorhergehenden Ansprüche und gemäß Anspruch 2, wobei das vierte Förderband (1) so eingerichtet ist, dass es sich kontinuierlich bewegt und/oder kontinuierlich Teigstücke (6) an das Paar (3) Förderbänder liefert.

5. Vorrichtung (10) gemäß einem der vorhergehenden Ansprüche und gemäß Anspruch 2, aufweisend eine Portioniervorrichtung zum Liefern von Teigstücken (6) an das vierte Förderband (1), wobei dies ausgelegt ist zum Liefern von Teigstücken (6) an das Paar (3) Förderbänder in einem wechselseitigen Abstand in der Transportrichtung, der zumindest der Länge eins Teigstücks (6) gleich ist.

6. Vorrichtung (10) gemäß Anspruch 5, wobei die Portioniervorrichtung ausgelegt ist, Teigstücke (6) in solch einem wechselseitigen Abstand zu liefern, dass eine Anzahl N von Teigstücken (6) zusammen mit N-1 wechselseitigen Abständen eine maximale Länge der Erstreckung der zueinander weisenden Transportoberflächen des Paars (3) Förderbänder hat.

7. Vorrichtung (10) gemäß einem der vorhergehenden Ansprüche mit Anspruch 2, aufweisend eine Klemme (7) zum Festhalten des stromabwärts gelegenen Endes eines Teigstücks (6) bezüglich des dritten Förderers (4), um zu verhindern, dass das Teigstück (6) beim Verdrehen rotiert.

8. Vorrichtung (10) gemäß einem der vorhergehenden Ansprüche, wobei die Klemme (7) so ausgebildet ist, dass sie sich während des Verdrehens mit dem Teigstück (6) bewegt und nach dem Verdrehen des Teigstücks (6) in eine Stellung zurückbewegt, in der sie ein folgendes Teigstück (6) klemmen kann.

9. Vorrichtung (10) gemäß einem der vorhergehenden Ansprüche, aufweisend einen Sensor (2) zum Erfassen des Eintreffens eines Teigstücks (6) oder eines vorderen Endes eines solchen und zum Bereitstellen eines Signals, das ein solches Eintreffen an ein Steuersystem zum Drehen des Paars (3) Förderbänder um die Drehachse mitteilt.

10. Vorrichtung (10) gemäß einem der vorhergehenden Ansprüche, aufweisend mehrere Paare (3) Förderbänder, die zueinander parallel angeordnet sind und einem gemeinsamen dritten Förderband (4) vorhergehen und/oder einem gemeinsamen vierten (1) Förderband vorausgehen.

## Revendications

1. Dispositif (10) pour torsader des morceaux de pâte, comprenant :
- une paire (3) de bandes transporteuses, comprenant une première et une deuxième bande transporteuse (3A, 3B), avec des surfaces de transport se faisant face pour pincer un morceau de pâte (6) entre elles, et pour transporter le morceau de pâte (6) dans la direction de transport des surfaces de transport se faisant face des première et deuxième bandes transporteuses (3A, 3B), laquelle direction de transport est la direction longitudinale dudit morceau de pâte (6) ;
- une troisième bande transporteuse (4), positionnée en aval de la paire (3) de bandes transporteuses dans la direction de transport, pour prélever un morceau de pâte (6) de la paire de bandes transporteuses et le transporter plus loin dans la direction longitudinale de celle-ci ;
dans lequel
- la paire (3) de bandes transporteuses peut tourner autour d'un axe de rotation s'étendant dans la direction longitudinale, pour torsader le morceau de pâte (6) autour de l'axe longitudinal pendant le transfert du morceau de pâte (6) de la paire de bandes transporteuses jusqu'à la troisième bande transporteuse, dans lequel la paire (3) de bandes transporteuses est suspendue dans un châssis (11) qui peut tourner par rapport à la troisième bande transporteuse (4),
dans lequel le châssis (11) est ménagé sur un côté tourné vers l'extérieur avec un premier système de transmission de force ou de couple (12), tel qu'une couronne dentée ou une poulie pour une courroie, pour transmettre une force ou un couple d'entraînement pour la rotation du châssis (11) à partir d'un entraînement externe situé à l'extérieur du châssis (11) jusqu'au châssis (11),
dans lequel le châssis (11) est ménagé sur une saillie vers l'extérieur avec un deuxième système de transmission de force ou de couple (14), tel qu'une couronne dentée ou une poulie pour une courroie, pour transmettre une force ou un couple d'entraînement pour le déplacement de la paire (3) de bandes transporteuses pour transporter le morceau de pâte (6) dans la direction de transport,
**caractérisé en ce que** le dispositif est pourvu d'un premier et d'un deuxième entraînement externe pouvant être commandés indépendamment, chacun venant en prise avec l'un des systèmes de transmission (12, 14).

2. Dispositif selon la revendication 1, comprenant une quatrième bande transporteuse (1), positionnée en amont dans la direction de transport par rapport à la paire (3) de bandes transporteuses, pour délivrer, dans la direction de transport, un morceau de pâte (6) à torsader autour de son axe longitudinal à la paire (3) de bandes transporteuses.

3. Dispositif (10) selon l'une des revendications précédentes, comprenant un système de commande, ménagé pour commander les premier et deuxième entraînements externes, en particulier ménagé pour réduire l'influence mutuelle d'une force ou d'un couple d'entraînement pour la rotation du châssis et d'une force ou d'un couple d'entraînement pour le déplacement de la paire (3) de bandes transporteuses.

4. Dispositif (10) selon l'une des revendications précédentes et la revendication 2, dans lequel la quatrième bande transporteuse (1) est ménagée pour se déplacer en continu, et/ou pour délivrer en continu des morceaux de pâte (6) à la paire (3) de bandes transporteuses.

5. Dispositif (10) selon l'une des revendications précédentes et la revendication 2, comprenant un dispositif de portionnement pour délivrer des morceaux de pâte (6) à la quatrième bande transporteuse (1), conçu pour délivrer des morceaux de pâte (6) à la paire (3) de bandes transporteuses avec une distance mutuelle dans la direction de transport qui est au moins égale à la longueur d'un morceau de pâte (6).

6. Dispositif (10) selon la revendication 5, dans lequel le dispositif de portionnement est adapté pour délivrer des morceaux de pâte (6) avec une telle distance mutuelle qu'un nombre N de morceaux de pâte (6) avec N-1 de distances mutuelles présente une longueur maximale de la distance des surfaces de transport de la paire (3) de bandes transporteuses se faisant face.

7. Dispositif (10) selon l'une des revendications précédentes y compris la revendication 2, comprenant une pince (7) pour fixer la position d'une extrémité aval d'un morceau de pâte (6) par rapport à la troisième bande transporteuse (4), pour empêcher le morceau de pâte (6) de tourner pendant la torsion.

8. Dispositif (10) selon l'une des revendications précédentes, dans lequel la pince (7) est conçue pour se déplacer avec le morceau de pâte (6) pendant la torsion, et après torsion du morceau de pâte (6) pour revenir à une certaine position pour pincer un morceau de pâte (6) suivant.

9. Dispositif (10) selon l'une des revendications précédentes, comprenant un capteur (2) pour détecter l'arrivée d'un morceau de pâte (6) ou d'une extrémité avant de celui-ci, et pour fournir un signal indiquant une telle arrivée à un système de commande pour faire tourner la paire (3) de bandes transporteuses autour de l'axe de rotation.

10. Dispositif (10) selon l'une des revendications précédentes, comprenant de multiples paires (3) de bandes transporteuses, disposées en parallèle précédant une troisième bande transporteuse (4) commune et/ou après une quatrième bande transporteuse (1) commune.
